# EUROPEAN PATENT SPECIFICATION

(11) **EP 0 329 110 B1**
(45) Date of publication and mention of the grant of the patent: **18.05.1994**
(21) Application number: 89102602.3
(22) Date of filing: 15.02.1989
(51) Int. Cl.: G02B 27/00

(54) **Multiple object viewing system**
Vielfach-Betrachtungssystem
Dispositif de visualisation d'objets multiples

(30) Priority: 16.02.1988 US 156122
(43) Date of publication of application: 23.08.1989
(73) Proprietor: K.W. MUTH COMPANY, INC., Sheboygan Wisconsin 53083 (US)
(72) Inventor: Roberts, John K., Camp Pendleton California 92055 (US)
(74) Representative: Finck, Dieter, Dr.Ing.

(56) References cited:
- EP-A- 0 216 014
- EP-A- 0 216 692
- US-A- 3 887 273
- US-A- 3 899 241
- PATENT ABSTRACTS OF JAPAN, vol. 9, no. 236 (P-390)[1959], 21st September 1985; & JP-A-60 88 925
- PATENT ABSTRACTS OF JAPAN, vol. 10, no. 159 (M-486)[2215], 7th June 1986; & JP-A-61 12 450

## Description

The development of multiple object viewing systems, sometimes called "heads-up display" (HUD) is relatively new and probably had its genesis in the military aircraft field. In the operation of high-speed aircraft, traveling in excess of the speed of sound, and particularly aircraft designed for combat maneuvering, it is extremely dangerous for the pilot to move his attention from a point in front of the aircraft to read the dials, knobs, gauges, instruments, indicators, etc., on the "dashboard" or instrument-panel placed in front of him but below his normal line of sight.

More recently, this same problem has surfaced in the field of high-speed motor car operation and has been translated into a safety factor aspect in the normal operation of civilian automobiles.

In any context, however, it is the safety feature which is important, because a HUD permits the operator of the vehicle to view, directly in his line of sight, critical instrumentation displays, such as speed, fuel consumption, oil pressure, etc., without taking his eyes from the area in front of the moving vehicle.

JP-A-60-88 925 discloses a louver-type translucent plate which is stuck on the internal surface of a windshield. The reflected image appearing in the field of view of the driver is a result of light striking the louvers, and being reflected into the field of view of the driver. Therefore, it should be readily apparent that, if the driver moves his or her head outside of the narrow cone of vision provided for by that device, they will not be able to see the image that is being reflected by the louvers. In contrast, the present invention is operable to provide an image which may be viewed from any position in the automobile and not solely from the driver's position.

EP-A-216 692 dicloses a heads-up diplay which uses holographic techniques to project an image.

The light must be projected onto the windscreen at a particular angle in order to provide an image which may be seen in the field of view of a user. However, the use of holographic displays is not always desirable. For instance, in automobiles the holographic display cannot be seen except within a very narrow cone of view.

An object of the present invention is to provide an instrument display apparatus which provides a "multiple object viewing" which can be directly controlled, either manually or automatically, in connection with ambient light and weather conditions, to provide "multiple object viewing" which is clear and distinct.

Still a further object of the present invention is to provide a "multiple object viewing system" which is "real estate friendly", i.e., it fits in to the existing vehicle construction and does not require additional space or construction to accommodate it in the vehicle.

Another object is to provide a "ghost-free" HUD system.

A further object is to provide a HUD system which absorbs or "blocks" secondary red/orange light waves which might otherwise create a "ghost" image.

An additional object is to provide a method and apparatus which is independent of the rake or slant of the windscreen and which, furthermore, can provide beneficial results in providing a screen against external interference, such as bright sunlight, the bright lights of oncoming vehicles, etc.

According to the present invention these obejcts are solved by the instrument display apparatus described in claim 1.

Preferred embodiments of the instrument display apparatus of the present invention are described in claims 2 and 3.

With the aid of the accompanying drawings embodiments of the invention are described.

FIG. 1 is a side schematic elevational view of the operating portion of a vehicle illustrating how the operator can view both the external environment as well as the reflections of the indicia placed in front of him within the vehicle.

FIG. 2 is a greatly enlarged diagrammatical illustration of the effect of the "multipathing" or "ghosting" of the reflected image, which can be avoided by the present invention.

FIG. 3 is a schematic front view of a windscreen with the film of the present invention affixed thereto.

FIG. 4 is an illustration of a portable demonstration device of the present invention.

FIG. 5 is a view similar to FIG. 2 with the enhancing film between two laminae of the glass.

FIG. 6 is a graph illustrating the light-wave-absorbing features of the enhancing film.

FIG. 7 is a sketch illustrating the appearance from the interior of the vehicle of the enhancing film on the windscreen .

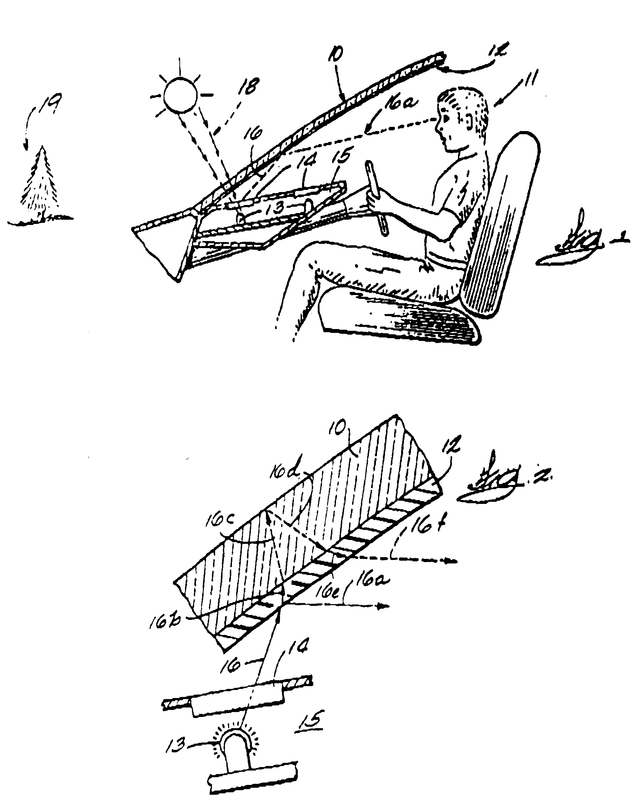

Considering FIG. 1, there is shown at 10 a windshield, windscreen, window, viewport, or any transfer sheet through which an environment is viewed, such as the windshield of an automobile, the windscreen of an aircraft, etc. It may be composed of glass, plastic, polycarbonate, acrylic, crystal, mineral, or any other transparent material, either tinted or neutral. Although a principal application would be aircraft or automobile windshields or windscreens, it is equally applicable to a side or rear window, or on other vehicles, such as motorcycles, but can also be used in connection with bank tellers' booths, control booths, ticket-selling booths, etc.

A thin transparent film 12 is a layer which may be any transparent plastic, glass, mineral, or other coating, including those with metallic additives, applied in molten form, solution, rolling adhesive, or other means of attachment directly to the inner surface of the windshield 10 or sandwiched between the two glass layers of safety glass. It is specifically not disposed in the space between the observer 11 and the windscreen 10.

The film 12 may incorporate a combination of any absorption, reflection, refraction, diffraction, interference, or polarization phenomena permitting a primary reflection, which is more powerful than any secondary reflection or image cast against the windscreen 10. Therefore, the external impact upon the windscreen is not sufficient or substantial enough to degrade any image cast against the film 12.

An object to be reflected by the film 12 on the inner side of the windscreen 10 to produce a "heads-up" image may be any gauge, dial, cathode ray tube, switch, knob, indicator, etc., which discloses a level, state or condition to be observed by the operator 11. Examples of such displays are speedometers, RPM indicators, temperature gauges, pressure, voltage, or amperage indicators, air speed indicators, compasses, altitude indicators, fuel level indicators, radio frequency indicators, volume level indicators, and status lights for environmental control, malfunction, etc.

This display is indicated at 14 in FIG. 1 and may be augmented by any back, side, or front lights 13 to enhance the reflected ambient light. This lighting 13 may be incandescent, fluorescent (e.g., sodium or mercury vapor) electro-luminescent, light-emitting diodes (LED), laser, etc., and may be placed in front of or behind the display 14. The intensity of the augment lighting may be controlled manually by a rheostat or potentiometer and automatically by a sensor, which can detect the external conditions and increase or decrease the augment lighting 13 if the external lighting, such as sunlight, headlights, etc., require compensation.

A dashboard 15 is illustrated, which may be a control panel, instrument panel, or framework which holds the display indicators 14 and the lights 13. This may be the same dash arrangement originally designed to display indicators direct to the observer, or may be supplemental thereto, or may be electronically or otherwise provided to display indicia on the enhancing film totally independent of any indicators which may appear on the dashboard.

A reflection from the indicators 14 which appear in the observer's line of view is displayed on the inside of the windscreen against the film 12 in such a position that the line of sight of the observer does not need to be shifted appreciably when reading the indicators chosen for the "heads-up" display while simultaneously looking forward beyond the front of the vehicle to the environment surrounding the vehicle.

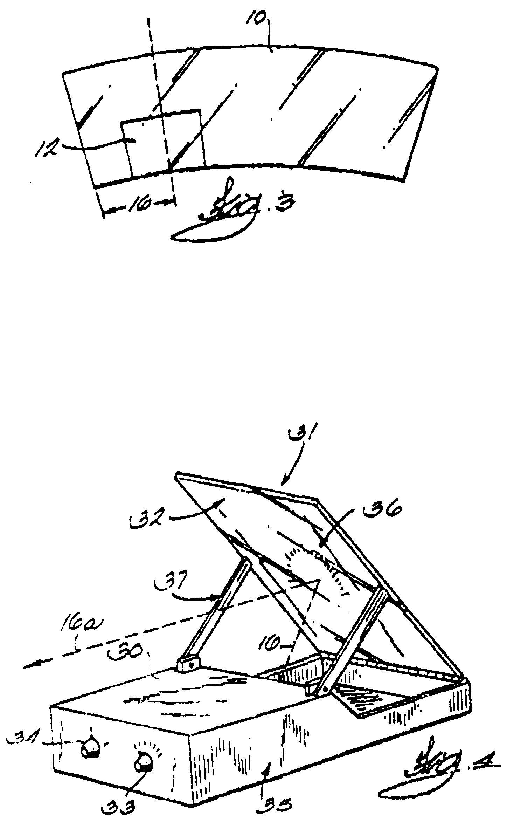

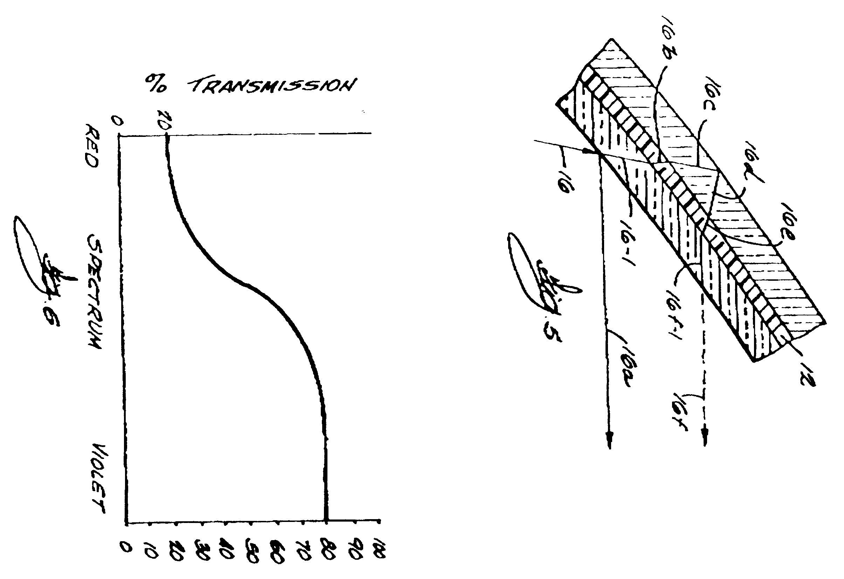

Thus, as is shown in FIG. 3, the area of the film 12 may be much smaller than the total area of the windscreen but disposed in such a position that it covers the standard area through which the operator views the environment ahead of the vehicle when moving forwardly. The distance 16 from the left-hand edge of the windscreen to the generally central area of the enhanced zone may be the standard distance for a driver in an automobile where the steering wheel is on the left side of the car. Understandably, this would be reversed in those countries where the steering wheel is on the right- hand side of the car. It can also be duplicated on the right-hand portion of the windscreen, as in the case of aircrafts where both the pilot and co-pilot can take advantage of this invention. Furthermore, though more expensive, the entire windscreen 10 can be provided with the film 12 so that the entire surface thereof is covered thereby.

Although it is chosen to illustrate a human being 11 as the observer or operator of vehicles with the present invention, using his own vision as the detector of the display on the windscreen, it is to be understood that any remote device for recording or transmitting of information, such as a camera, a video recorder, a television camera, etc., can be disposed in the position of the person 11 illustrated in FIG. 1. This is particularly critical for operation of drone aircraft or vehicles which have no human operators but are remotely controlled.

In FIG. 1, it is also illustrated at 18 how light from the environment outside the vehicle, because of reflection, refraction, diffusion, or direct illumination, may impinge through the windscreen 10 upon the indicators 14, as well as upon the observer 11. This ambient light determines the intensity required for the interior augment lighting 13 to produce a legible image on the film 12.

All of the foregoing provides the display of the objects and instruments or dials, etc., 14 on the film 12 which may be the inner surface of the combined windscreen 10 and film 12, while yet permitting clear and unobstructed view of the environment 19 directly in the line of sight of the operator or viewer 11.

FIG. 2 illustrates the "multipathing" or "ghost effect" which can occur when an image or ray of light passes through the laminated or coated piece of plate glass.

The primary, desired image 16a is reflected off the surface nearest to the observer (in this case the interface between the air and the film which has been applied to the interior surface of the windscreen). One of the infinite number of secondary reflections that can occur in such system is shown at 16f as the "ghost" or path that is most troublesome because of a combination of its intensity and the virtual separation from 16a. Other secondary paths are either so weak or so near to 16a as to be undetectable or indiscernable.

The primary purpose of the film 12 is to strengthen the primary reflection 16a and to diminish the secondary reflection 16f to the point where it is undetectable and the "ghost" is eliminated and only one image is perceived by the observer 11.

To eliminate or materially diminish the secondary reflection 16f, the film 12 contains orange/red "blockers" so that when the light wave passes through the film as at 16b, it is substantially absorbed by the film 12 and, therefore, any waves passing therebeyond as at 16c and reflected from the outer surface of the glass along the path 16d, are further absorbed when passing through the film at 16e, and thus substantially no light waves are reflected to the eye of the observer 11 along the path 16f. If any light waves do succeed in making this transition, they are virtually undetectable and, therefore, no "ghost" image is created.

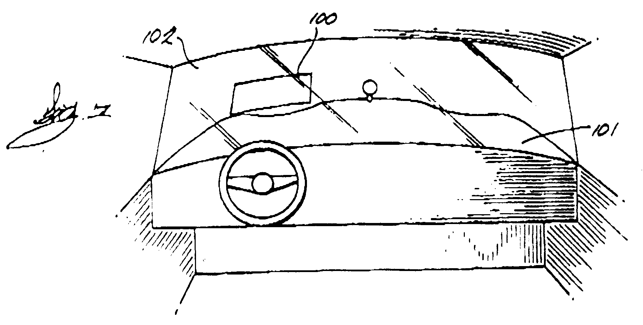

FIG. 4 illustrates one form of a portable device 30 which demonstrates the principle of the present invention. The device is approximately 60 cm (24") long by 30 cm (12") wide and 45 cm (18") high and consists of a piece of laminated safety glass 31 with attached film 32 supported by a box frame 35 in a manner approximating the rake of an automobile windshield with a dashboard underneath. Also supported by the frame 35 is a speedometer display face (not shown) which casts the "heads-up display" image 36 along the line 16, to be reflected from the film 32 along path 16a to the observer 11. Internal lighting is supplied by the twin quartz halogen bulbs (also not shown). The power to the augment lighting is supplied when the on/off switch 34 is turned on. A rheostat 33 allows manual intensity control to suit the background lighting and contrast in the environment. The windscreen 31 and the film 32 may be removed from the support 35 by unbolting the brackets and supports 37.

The film 12 of the present invention may be a flat, tinted plastic sheet (affixed with adhesive) which is unembossed, unetched, and not printed with any pattern. It may take any form, however, fitting the description for enhancing film 12 provided earlier in this specification.

It is particularly critical that no shadow or "ghost" effects are created, and that the image, therefore, is totally correct, clear and undistorted.

In the present invention, one aspect which distinguishes the structure from the prior disclosures (as, for instance, the disclosure shown in the Tustison U.S. Patent 4,794,053) is that the enhancing film 12 is a specific "blocker" or absorber of certain optical wave lengths and, more specifically, an absorber of the orange/red light waves. If other colors are to be blocked, the wave lengths of the projected light 16 is matched to the absorbing band of the film 12. This film 12 may be placed, as previously discussed, either on the inside surface (the operator side) of the windscreen 10, or laminated between two separate layers of the windscreen 10 so that it is between the inner and outer surface of the windscreen 10. Although it could be placed on the outside, this would be undesirable because it would be abraded by sand, dirt, oil, snow, etc., impinging against the outside of the windscreen 10 as the vehicle moves forward.

The most desirable place is within the windscreen 10, because even on the inner surface thereof there is a likelihood of the enhancing film being abraded when the windscreen 10 is cleaned.

Thus FIG. 5 shows a cross-section of the windscreen with the enhancing film 12 placed between the inner and outer surfaces. This illustrates how the reflected red/orange image 16a is seen by the driver, but any light which passes through the inner lamina 16-1 is absorbed at 16b by the film 12 and, therefore, any continuing image (if any) which passes through the outer lamina at 16c and reflected by the surface thereof along the path 16d, is further and once again absorbed by the red/orange "blocker" film at 16e. Any light which passes through the inner lamina at 16f-1 toward the observer 11 along line 16f is either so minimal as to be incapable of creating a "ghost", or is virtually undetectable.

The specific advantage of this is that it prevents any "ghosting image".

The elimination of the "ghosting image" is particularly critical in the more recent model automobiles where a 28° rake of the windscreen 10 (i.e., the angle between the slope of the windscreen 10 and the line of vision 16a of the drive 11) is fairly severe and intends to exaggerate or increase the "ghosting image" problem.

This disposition of the film 12 and the use of the orange/ red "blockers" is also illustrated in FIG. 6 which is a graph illustrating that 80% or more of the orange/red waves are absorbed by the enhancing film on the initial pass as well as the reflected pass through the film 12.

FIG. 7 further illustrates the position of the film 12 in the windscreen, where the small patch 100 appears in the driver's 11 line of vision while looking through the windscreen 10 toward the road ahead. The slope of the hood 101 of the automobile mandates that the film 12 be placed high enough in the windscreen so that the driver's line of vision passes through the film 12 above the surface of the hood, and beyond, to the road ahead.

It can also be seen by reference to FIG. 7 that the film 12 does not have to extend clear to the upper edge 102 of the windscreen 10, nor very far to either the right or left, because the operator 11 of the vehicle, when driving at customary road speeds, looks straight ahead, not to the right or left when interested in knowing what vital information is projected on the film.

However, the enhancing film area must be large enough to accommodate the line of vision of a smaller person sitting in the driver's seat (which dimension determines the location of the lower edge of the film) as well as a tall person sitting in the driver's seat, (which dimension determines the location of the upper edge of the enhancing film).

## Claims

1. An instrument display apparatus comprising:
- a transparent sheet (10),
- a thin transparent film (12) made integral with the transparent sheet (10), and
- at least one instrument display (14) which emits a beam of light in a predetermined wavelength range and which is positioned so that this beam is reflected by a first surface of the film towards a viewing position, said first surface being the surface of the film facing the display and the viewing position, **characterized** in that the film (12) is constructed such that light of said predetermined wavelength range which may pass through said first surface into the interior of the film is substantially absorbed by the film.

2. Instrument display apparatus according to claim 1, **characterized** in that the predetermined wavelength range is the orange/red light waves of the colour spectrum.

3. An instrument display apparatus according to claim 1, **characterized** in that the film (12) is a thin sheet secured on the transparent sheet (10) or is a coating applied to the transparent sheet (10).

## Patentansprüche

1. Instrumenten-Anzeigegerät mit
- einer transparenten Folie (10),
- einem mit der transparenten Folie (10) einteilig verbundenen transparenten Film (12), und
- wenigstens einer Instrumenten-Anzeige (14), die einen Lichtstrahl in einem vorbestimmten Wellenlängenbereich aussendet und so angeordnet ist, daß der Lichtstrahl durch eine erste Oberfläche des Films zur Sichtposition reflektiert wird, wobei die erste Oberfläche die der Anzeige und der Sichtposition zugewandte Oberfläche des Films ist,
dadurch **gekennzeichnet**, daß der Film (12) so aufgebaut ist, daß Licht des vorbestimmten Wellenlängenbereichs, das durch die erste Oberfläche ins Innere des Films eintreten kann, vom Film im wesentlichen absorbiert wird.

2. Instrumenten-Anzeigegerät nach Anspruch 1, dadurch gekennzeichnet, daß der vorbestimmte Wellenlängenbereich die orange/roten Lichtwellen des Farbspektrums sind.

3. Instrumenten-Anzeigegerät nach Anspruch 1, dadurch gekennzeichnet, daß der Film (12) eine dünne Folie ist, die auf der transparenten Folie (10) befestigt ist oder ein Überzug, der auf die transparente Folie (10) aufgebracht ist.

## Revendications

1. Dispositif à affichage d'instrument comprenant :
- une feuille transparente (10),
- un mince film transparent (12) rendu solidaire de la feuille transparente (10), et
- au moins un affichage d'instrument (14) qui émet un faisceau lumineux dans une plage de longueurs d'onde prédéterminée et qui est positionné de manière que ce faisceau est réfléchi par une première surface du film vers une position de visualisation, ladite première surface étant la surface du film faisant face à l'affichage et à la position de visualisation, caractérisé en ce que le film (12) est réalisé de telle manière que la lumière de ladite plage de longueurs d'onde prédéterminée qui peut passer à travers ladite première surface à l'intérieur du fil est sensiblement absorbée par le film.

2. Dispositif à affichage d'instrument suivant la revendication 1, caractérisé en ce que la plage de longueurs d'onde prédéterminée se situe dans les ondes de lumière orange/rouge du spectre de couleurs.

3. Dispositif à affichage d'instrument suivant la revendication 1, caractérisé en ce que le film (12) est une mince feuille fixée sur la feuille transparente (10) ou est un revêtement appliqué sur la feuille transparente (10).
